# EUROPEAN PATENT APPLICATION

(11) **EP 3 306 727 A1**
(43) Date of publication of application: **11.04.2018**
(21) Application number: 16799678.4
(22) Date of filing: 05.04.2016
(51) Int. Cl.: H01M 8/18, H01M 4/86, H01M 8/02

(54) **REDOX FLOW BATTERY**

(30) Priority: 27.05.2015 JP 2015108018
(71) Applicant: Sumitomo Electric Industries, Ltd., Osaka-shi, Osaka 541-0041 (JP)
(72) Inventor: HANAFUSA, Kei, Osaka-shi Osaka 554-0024 (JP); ITO, Kenichi, Osaka-shi Osaka 554-0024 (JP)
(74) Representative: Boult Wade Tennant
(86) International application number: PCT/JP2016/061058
(87) International publication number: WO 2016/189970

(57) **Abstract**

A redox flow battery includes an electrode to which an electrolyte is supplied; a membrane disposed to face a first surface of the electrode; and a bipolar plate disposed to face a second surface of the electrode. The bipolar plate has a channel at a surface thereof facing the electrode, the electrolyte flowing through the channel, and the electrode has a plurality of recesses in a region thereof facing the channel, the recesses guiding the electrolyte in the channel from a side near the bipolar plate toward a side near the membrane.

## Description

### Technical Field

The present invention relates to a redox flow battery.

### Background Art

Recently, as an electric power shortage becomes a serious problem, there is demand of immediate introduction of natural energy, such as wind power generation or solar photovoltaic power generation on a worldwide scale, and stabilization of electric power systems (for example, holding frequency or voltage). One of the countermeasure technologies receiving attention is installation of a large-capacity storage battery to smooth a variation in output, to store dump power, to level a load, and so forth.

One of large-capacity storage batteries is a redox flow battery (hereinafter, occasionally referred to as RF battery). The RF battery has characteristics such as (1) ease of capacity increase to a megawatt (MW) level, (2) a long life, (3) capability of accurately monitoring the state of charge (SOC) of the battery, and (4) high design freedom such that battery output and battery capacity can be independently designed, and is expected to be a storage battery suitable for stabilization of electric power systems.

The RF battery typically has, as a main component, a battery cell including a positive electrode to which a positive electrolyte is supplied, a negative electrode to which a negative electrolyte is supplied, and a membrane interposed between the positive and negative electrodes. A stack including a plurality of battery cells, called cell stack, is used for large-capacity use. In many cases, a bipolar plate is interposed between adjacent ones of the battery cells. The positive and negative electrodes each use a porous body (PTL 1, PTL 2) such as carbon felt, and the bipolar plate uses a plate member (PTL 2) such as plastic carbon.

The RF battery is used typically by constructing a RF battery system including a circulation mechanism that supplies an electrolyte to the RF battery in a circulation manner. The circulation mechanism includes tanks that store electrolytes of respective electrodes, ducts that connect the tanks of the respective electrodes with the RF battery, and pumps disposed at the ducts. PTL 1 describes that both the electrodes have specific grooves and hence energy loss (pressure loss) caused by the pumps is hardly increased.

### Citation List

### Patent Literature

PTL 1: Japanese Unexamined Patent Application Publication No. 2002-246035
PTL 2: Japanese Unexamined Patent Application Publication No. 2002-367659

### Summary of Invention

### Technical Problem

For the redox flow battery, it is desirable to decrease the amount of change in cell voltage even when the operational current density is increased.

For example, when the discharge current density is increased, the output per unit area can be increased, and hence it is expected to decrease the cost of the cell stack. However, when the discharge current density is increased, the cell voltage is decreased. Therefore, it is desirable to reduce the decrease in cell voltage and to decrease the amount of change over time in cell voltage.

As stated in Test example 1, described later, it was found that a RF battery using plate-shaped electrodes and bipolar plate without a groove produced a small amount of change in cell voltage even when the operational current density is increased. However, if it is aimed at increasing the areas of the electrodes for increasing the capacity, use of the plate-shaped electrodes without a groove and the bipolar plate without a groove results in a large pressure loss due to the flow resistance of the electrolyte. If the electrodes have the specific grooves as described in PTL 1, the pressure loss can be decreased. However, even this configuration is not sufficient as the countermeasure for decreasing the amount of change in cell voltage when the operational current density is increased.

Under these circumstances, it is an object of the present invention to provide a redox flow battery that can decrease the amount of change in cell voltage even when the operational current density is increased.

### Solution to Problem

A redox flow battery according to an aspect of the present invention includes an electrode to which an electrolyte is supplied; a membrane disposed to face a first surface of the electrode; and a bipolar plate disposed to face a second surface of the electrode.

The bipolar plate has a channel at a surface thereof facing the electrode, the electrolyte flowing through the channel.

The electrode has a plurality of recesses in a region thereof facing the channel, the recesses guiding the electrolyte in the channel from a side near the bipolar plate toward a side near the membrane.

### Advantageous Effects of Invention

The above-described redox flow battery can decrease the amount of change in cell voltage even when the operational current density is increased.

### Brief Description of Drawings

[Fig. 1] Figure 1 is a cross-sectional explanatory view schematically illustrating an arrangement state of a bipolar plate, electrodes, and a membrane included in a redox flow battery according to Embodiment 1.
[Fig. 2] Figure 2 is an exploded perspective view of the bipolar plate and the electrodes included in the redox flow battery according to Embodiment 1.
[Fig. 3] Figure 3 is a plan view when the arrangement state of the bipolar plate and the electrodes included in the redox flow battery according to Embodiment 1 is viewed from the electrode side.
[Fig. 4] Figure 4 is an explanatory view illustrating a basic configuration and a basic operating principle of a redox flow battery system including the redox flow battery according to Embodiment 1.
[Fig. 5] Figure 5 is a schematic configuration diagram illustrating an example cell stack included in the redox flow battery according to Embodiment 1.
[Fig. 6] Figure 6 is a graph indicating the relationship between the current density and the cell voltage for a polarization characteristic test performed in Test example 1.
[Fig. 7] Figure 7 is a graph indicating the relationship between the current density, and the voltage difference of the initial cell voltage and the stabilized cell voltage for the polarization characteristic test performed in Test example 1.

### Description of Embodiments

### [Description on embodiment of the present invention]

To decrease an amount of change in cell voltage when operational current density is increased, an internal resistance of a redox flow battery may be decreased. The inventors found that it is effective to decrease particularly a diffusion resistance, included in the internal resistance that is the sum of a conductor resistance, a reaction resistance, and a diffusion resistance, for decreasing the amount of change in cell voltage, and by designing the bipolar plate and electrodes to have specific shapes, the battery reaction field can be sufficiently ensured while the diffusion resistance is decreased. The present invention is based on the above-described findings. The contents according to embodiments of the present invention are described first in the form of a list.
(1) A redox flow battery (RF battery) according to an embodiment includes an electrode to which an electrolyte is supplied, a membrane disposed to face a first surface of the electrode, and a bipolar plate disposed to face a second surface of the electrode.
   The bipolar plate has a channel at a surface thereof facing the electrode, the electrolyte flowing through the channel.
   The electrode has a plurality of recesses in a region thereof facing the channel, the recesses guiding the electrolyte in the channel from a side near the bipolar plate toward a side near the membrane.
   The recesses may preferably include at least one of a through hole being open at both a surface of the electrode facing the bipolar plate (hereinafter, occasionally referred to as bipolar-plate-side surface) and a surface of the electrode facing the membrane (hereinafter, occasionally referred to as membrane-side surface) and extending from the bipolar-plate-side surface to the membrane-side surface, a groove having an opening at the bipolar-plate-side surface and having a depth smaller than a thickness of the electrode, and a groove having an opening at the membrane-side surface and having a depth smaller than the thickness of the electrode.
   When a plane of the recesses parallel to a surface of the electrode, that is, a plane orthogonal to a thickness direction of the electrode is defined as a cross-sectional plane, a diameter of an envelope circle of each of the recesses in a certain cross-sectional plane may be preferably larger than an average diameter of pores of a porous body that forms the electrode. The average diameter of the pores of the porous body is obtained by a method of mercury penetration.
   The RF battery has the channel at the bipolar plate, and the plurality of recesses being open at at least one of the bipolar-plate-side surface and the membrane-side surface of the electrode. The recesses contain a less constituent material or substantially no constituent material of the electrode in comparison with a region of the electrode other than the recesses. Hence the recesses may have a lower flow resistance of the electrolyte, particularly for a flow resistance in the thickness direction of the electrode. In the RF battery, even if the electrode is increased in size to meet large-capacity use, the electrolyte is easily permeated and diffused in the electrode, resulting in good flowability of the electrolyte. Accordingly, the RF battery can decrease the pressure loss caused by the flow resistance.
   In particular, the RF battery has the plurality of recesses at specific positions in the electrode, or more specifically, in the region facing the channel of the bipolar plate (hereinafter, occasionally referred to as channel-corresponding region). Hence, in comparison with a case where a plate-shaped electrode without a recess is disposed, the electrolyte in the channel of the bipolar plate is easily moved from the side near the bipolar plate toward the side near the membrane. In the RF battery, the amount of electrolyte directed to the side near the membrane can be increased. Also, the electrolyte sucked into the recesses is permeated and diffused from inner walls defining the recesses to the peripheries of the recesses, and hence the diffusion resistance of the electrolyte is low. In the RF battery, the internal resistance can be decreased because of the low diffusion resistance even when the operational current density is increased, and hence the amount of change in cell voltage caused by the internal resistance can be decreased.
   Also, the electrolyte is sufficiently supplied to the peripheries of the recesses to properly carry out a battery reaction. Hence, in the RF battery, a region of the electrode in the peripheries of the recesses from the side near the bipolar plate to the side near the membrane functions as a battery reaction field, and a battery reaction zone can be sufficiently ensured. Accordingly, with the RF battery, the amount of current can be increased and high output can be obtained.
(2) An example of the RF battery may be an embodiment in which a total area of openings of the recesses in the region of the electrode facing the channel is larger than a total area of recesses in a region other than the region facing the channel.
   If the recesses are provided in the region of the electrode other than the channel-corresponding region, the diffusion resistance can be further decreased. Even when the operational current density is increased, the amount of change in cell voltage can be further easily decreased. In contrast, if the recesses are provided only in the channel-corresponding region of the electrode and a recess is not substantially provided in the region other than the channel-corresponding region, the battery reaction zone can be sufficiently ensured while the flow resistance and the diffusion resistance of the electrolyte are decreased, and hence the amount of current can be increased.
(3) An example of the RF battery may be an embodiment in which the recesses include through holes.
   In the embodiment, the electrode includes the through holes and hence the diffusion resistance of the electrolyte can be further decreased. Even when the operational current density is increased, the amount of change in cell voltage can be further easily decreased. Also, in the embodiment, the flow resistance of the electrolyte in the thickness direction of the electrode can be further decreased, and the battery reaction field can be sufficiently ensured in the peripheries of the through holes. Further, the through holes are more easily formed than the grooves, and hence the electrode having the through holes is easily manufactured. Accordingly, the embodiment also has good productivity.
(4) An example of the RF battery may be an embodiment in which the recesses each have an opening diameter in a range from 0.1 mm to 2.0 mm. The opening diameter is a diameter of an envelope circle of each of the recesses.
   In the embodiment, the recesses with the sufficiently large openings are provided, and hence the diffusion resistance of the electrolyte can be further decreased. Even when the operational current density is increased, the amount of change in cell voltage can be further easily decreased. Also, in the embodiment, the openings are not excessively large while the flow resistance of the electrolyte can be further decreased because the recesses with the sufficiently large openings are provided, and therefore the battery reaction zone can be sufficiently ensured.
(5) An example of the RF battery may be an embodiment in which the channel includes an inlet channel through which the electrolyte is supplied to the electrode, and an outlet channel which does not communicate with the inlet channel and is independent from the inlet channel and through which the electrolyte is discharged from the electrode; and the inlet channel and the outlet channel have respective regions with comb-tooth shapes, respective comb teeth of the comb-tooth shapes being disposed to face each other and to be interdigitated with each other.
   The comb tooth of the inlet channel and the comb tooth of the outlet channel are disposed to face each other and to be interdigitated with each other in parallel to each other, and the battery reaction zone of the electrode is disposed over the comb teeth disposed in parallel. The amount of electrolyte flowing through the battery reaction zone disposed over the comb teeth is increased more easily than a case where the inlet channel is not interdigitated with the outlet channel. Hence, in the embodiment, it can be expected that the battery reaction in the battery reaction zone of the electrode is activated, and the amount of change in cell voltage can be decreased even when the operational current density is increased. Also, in the embodiment, the flow state of the electrolyte in the battery reaction zone of the electrode more easily becomes uniform in the entire electrode and the battery reaction is easily uniformly provided in a wide range of the electrode.
(6) An example of the RF battery may be an embodiment in which a constituent material of the electrode contains carbon fiber and binder carbon.
   The electrode made of a carbon material with conductivity, such as the carbon fiber and the binder carbon properly functions as a member that promotes an electrochemical reaction of an active material in the electrolyte. Also, the electrolyte is easily permeated in the electrode containing the carbon fiber, and hence the active material in the electrolyte can properly carry out the battery reaction in the battery reaction zone. Further, the electrode containing the binder carbon can increase the conductivity and increase the strength. It is to be noted that the binder carbon may cause an increase in flow resistance and diffusion resistance of the electrolyte. However, in the embodiment, since the bipolar plate has the channel and the electrode has the plurality of recesses in the channel-corresponding region, the flow resistance and the diffusion resistance of the electrolyte can be easily decreased even in the electrode containing the binder carbon, and the battery reaction zone can be sufficiently ensured. Accordingly, in the embodiment, the amount of change in cell voltage can be decreased even when the operational current density is increased.

### [Detailed description on embodiment of the present invention]

Hereinafter, a redox flow battery (RF battery) according to an embodiment of the present invention is described in detail below with reference to the drawings. In the drawings, the same reference sign represents the component with the same name.

### [Embodiment 1]

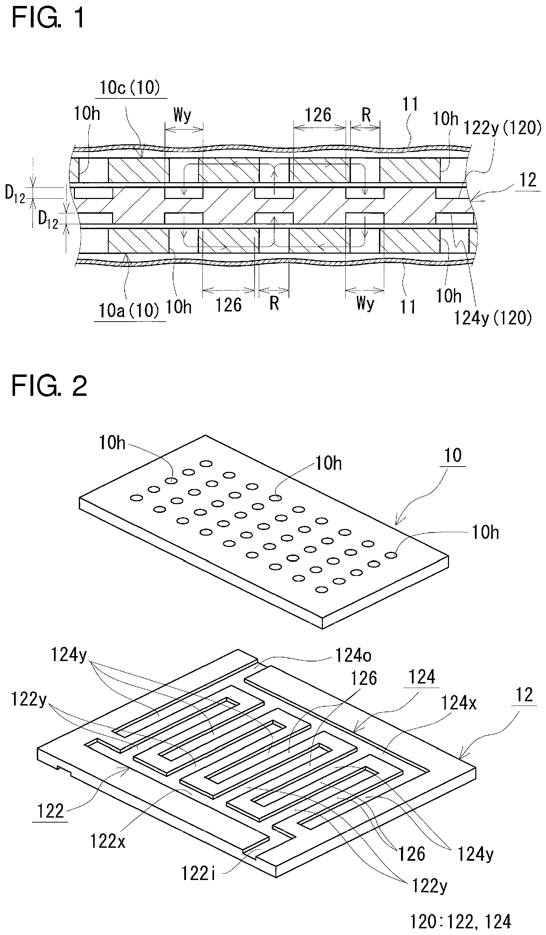

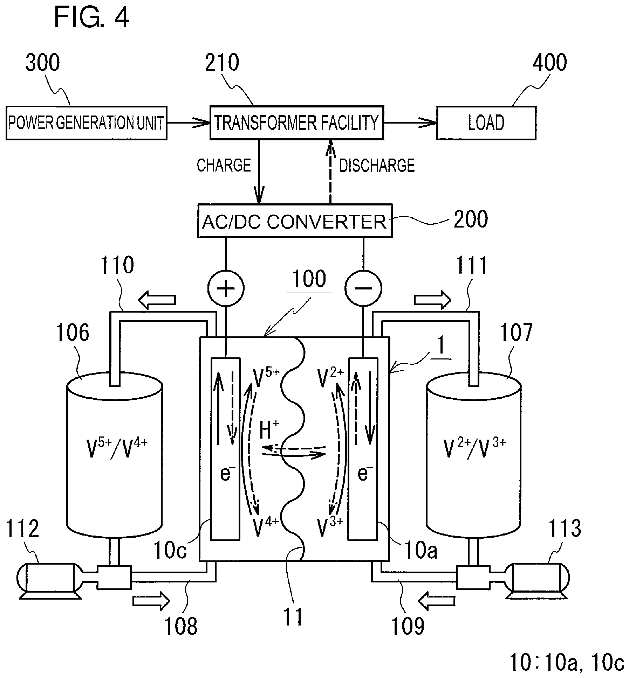

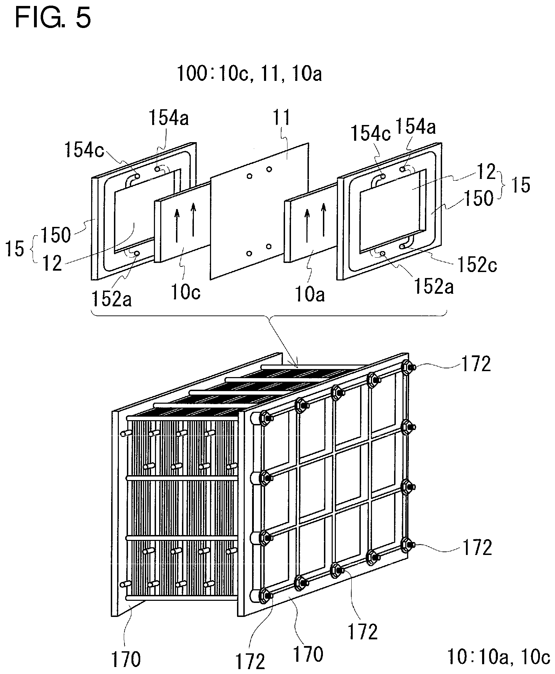

A basic configuration of a RF battery system including a RF battery 1 according to Embodiment 1 is described first with reference to Figs. 4 and 5, and then an electrode 10 and a bipolar plate 12 are described in more detail with reference to Figs. 1 to 3. In Fig. 4, ions in a positive tank 106 and a negative tank 107 are examples of ionic species contained in positive and negative electrolytes. Also, in Fig. 4, a solid-line arrow represents charging, and a broken-line arrow represents discharging.

### (Overview of RF battery)

The RF battery 1 according to Embodiment 1 is used as a RF battery system provided with a circulation mechanism that circulates and supplies an electrolyte to the RF battery 1 as illustrated in Fig. 4. Typically, the RF battery 1 is connected to a power generation unit 300 and a load 400, such as an electric power system or a customer, through an alternating-current/direct-current converter (AC/DC converter) 200 and a transformer facility 210. The RF battery 1 performs charging by using the power generation unit 300 as an electric power supply source, and performs discharging by using the load 400 as an electric power supply target. Examples of the power generation unit 300 include solar photovoltaic power generation apparatuses, wind power generation apparatuses, and other general power plants.

### (Basic configuration of RF battery)

The RF battery 1 has, as a main component, a battery cell 100 including a positive electrode 10c to which a positive electrolyte is supplied, a negative electrode 10a to which a negative electrolyte is supplied, and a membrane 11 interposed between the positive electrode 10c and the negative electrode 10a. The RF battery 1 includes a plurality of the battery cells 100, and includes a bipolar plate 12 (Fig. 5) between adjacent ones of the battery cells 100.

The electrode 10 is a reaction field where active-material ions contained in a supplied electrolyte carry out a battery reaction. The electrode 10 is formed of a porous body to allow the electrolyte to flow therethrough.

The membrane 11 is a separating member that separates the positive electrode 10c and the negative electrode 10a from each other and is also a member through which predetermined ions penetrate.

The bipolar plate 12 is a conductive member that is disposed between the positive electrode 10c and the negative electrode 10a and that passes current but does not pass the electrolyte.

As illustrated in Fig. 5, the electrodes 10 and the bipolar plate 12 are flat-plate members. The bipolar plate 12 is typically used in the form of a frame assembly 15 including a frame member 150 formed on the outer periphery of the bipolar plate 12. The frame member 150 has liquid supply holes 152c and 152a for supplying the electrolyte to the electrode 10 on the bipolar plate 12, and liquid discharge holes 154c and 154a for discharging the electrolyte. The frame member 150 is made of a resin or the like having high resistance to electrolyte and electrical insulating properties.

The plurality of battery cells 100 are stacked and used in the form called cell stack. As illustrated in Fig. 5, the cell stack is formed by repeatedly stacking a bipolar plate 12 of a frame assembly 15, a positive electrode 10c, a membrane 11, a negative electrode 10a, a bipolar plate 12 of another frame assembly 15, and so on in this order. In the case where the RF battery 1 is designed for large-capacity use or the like, a sub-cell stack including a predetermined number of battery cells 100 is prepared, and a plurality of sub-cell sacks are stacked for use.

Figure 5 illustrates an example in which a plurality of sub-cell stacks are provided. Current collector plates (not illustrated), instead of bipolar plates 12, are disposed on electrodes 10 located at both ends in the stacking direction of battery cells 100 in a sub-cell stack or cell stack. End plates 170 are typically disposed on both ends in the stacking direction of the battery cells 100 in the cell stack, and the pair of end plates 170 are joined with joining members 172, such as long bolts, and integrated.

### (Circulation mechanism)

The circulation mechanism includes a positive tank 106 that stores a positive electrolyte to be circulated and supplied to the positive electrode 10c, a negative tank 107 that stores a negative electrolyte to be circulated and supplied to the negative electrode 10a, ducts 108 and 110 that connect the positive tank 106 with the RF battery 1, ducts 109 and 111 that connect the negative tank 107 with the RF battery 1, and pumps 112 and 113 provided on the upstream side (supply side) ducts 108 and 109, respectively. By stacking a plurality of frame assemblies 15, liquid supply holes 152c and 152a and liquid discharge holes 154c and 154a constitute electrolyte flow duct lines, and the ducts 108 to 111 are connected to the duct lines.

### (Overview of RF battery system)

In the RF battery system, by using the positive electrolyte circulation channel including the positive tank 106 and the ducts 108 and 110 and the negative electrolyte circulation channel including the negative tank 107 and the ducts 109 and 111, the positive electrolyte is circulated and supplied to the positive electrode 10c, and the negative electrolyte is circulated and supplied to the negative electrode 10a. As a result of the circulation and supply, the RF battery 1 performs charging and discharging in response to valence change reactions of ions serving as active materials in the electrolytes of the respective electrodes. The basic configuration of the RF battery system may appropriately use a known configuration.

### (Bipolar plate and electrodes)

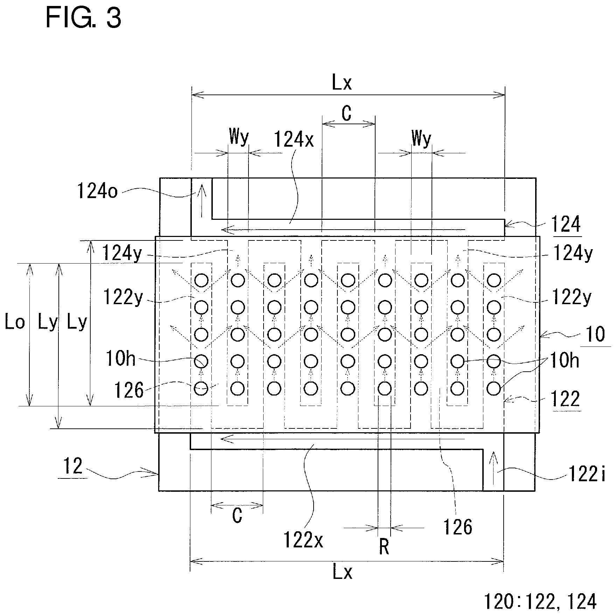

Characteristics of the RF battery 1 according to Embodiment 1 are, for example, that the bipolar plate 12 has a channel 120 at a surface thereof facing the electrode 10, an electrolyte flowing through the channel 120 (Fig. 1); and that the electrode 10 has a plurality of recesses 10h at positions overlapping the channel of the bipolar plate 12, the recesses 10 guiding the electrolyte in the channel 120 toward a side near the membrane 11 (Fig. 3). In Figs. 1 and 2, the bipolar plate 12 is illustrated to be thick in an exaggerated manner for easier understanding.

### • Bipolar plate

The bipolar plate 12 is a conductive member that is interposed between adjacent battery cells 100 (Fig. 5) and that serves as a partition between the positive and negative electrolytes. The bipolar plate 12 is typically a flat plate with a rectangular shape as illustrated in Figs. 2 and 3. The bipolar plate 12 is disposed between the positive electrode 10c and the negative electrode 10a such that a front surface and a back surface of the bipolar plate 12 respectively face the positive electrode 10c of one of the adjacent battery cells 100 and the negative electrode 10a of the other battery cell 100. A first surface (front surface) of the bipolar plate 12 is a surface facing the positive electrode 10c, and a second surface (back surface) thereof is a surface facing the negative electrode 10a.

### •• Channel

The bipolar plate 12 has a groove open at the surface thereof facing the electrode 10. The groove functions as the channel 120 through which the electrolyte flows. The channel 120 is provided for adjusting the flow of the electrolyte flowing to the electrode 10 by the pumps 112 and 113 (Fig. 4) in each battery cell 100. Figure 1 illustrates an example in which the bipolar plate 12 has the channel 120 at each of the front surface and the back surface thereof. The positive electrolyte flows through the channel 120 provided at the first surface of the bipolar plate 12 disposed to face the positive electrode 10c. The negative electrolyte flows through the channel 120 provided at the second surface of the bipolar plate 12 disposed to face the negative electrode 10a. The flow of the electrolyte in each battery cell 100 can be adjusted by adjusting the shape and dimensions of the groove serving as the channel 120.

### ••• Shape

As illustrated in Figs. 2 and 3, the channel 120 in this example includes an inlet channel 122 that supplies the electrolyte to the electrode 10 and an outlet channel 124 that discharges the electrolyte from the electrode 10. The inlet channel 122 and the outlet channel 124 do not communicate with each other and are independent from each other. The inlet channel 122 and the outlet channel 124 have respective regions with comb-tooth shapes. The channel 120 has a facing and interdigitated comb-teeth shape in which the comb tooth of the inlet channel 122 and the comb tooth of the outlet channel 124 are disposed to face each other and to be interdigitated with each other.

The inlet channel 122 includes an inlet part 122i which is connected to the liquid supply hole 152c or 152a (Fig. 5) and to which the electrolyte is supplied, a lateral groove part 122x connected to the inlet part 122i and extending in a lateral direction of the bipolar plate 12 (in Fig. 3, left-right direction), and a plurality of vertical groove parts 122y extending from the lateral groove part 122x in a vertical direction of the bipolar plate 12 (in Fig. 3, up-down direction) and disposed in parallel to each other at a predetermined interval C (Fig. 3). The inlet part 122i, the lateral groove part 122x, and the vertical groove parts 122y are continuous.

The outlet channel 124 has a shape similar to that of the inlet channel 122. The outlet channel 124 includes an outlet part 124o which is connected to the liquid discharge hole 154c or 154a (Fig. 5) and which discharges the electrolyte flowing from the inlet channel 122 through the electrode 10, a lateral groove part 124x connected to the outlet part 124o and extending in the lateral direction of the bipolar plate 12, and a plurality of vertical groove parts 124y extending from the lateral groove part 124x in the vertical direction of the bipolar plate 12 and disposed in parallel to each other at a predetermined interval C. The outlet part 124o, the lateral groove part 124x, and the vertical groove parts 124y are continuous.

A vertical groove part 124y of the outlet channel 124 is disposed between adjacent vertical groove parts 122y of the inlet channel 122. That is, the vertical groove parts 122y of the inlet channel 122 and the vertical groove parts 124y of the outlet channel 124 alternately disposed in the lateral direction. With this configuration, the electrolyte supplied from the inlet part 122i forms a flow along the shape of the channel 120 as indicated by arrows in the left-right direction and arrows in the up-down direction in Fig. 3, and forms a flow in the lateral direction between the vertical groove parts 122y and 124y through a ridge part 126 located between the vertical groove parts 122y and 124y as indicated by arrows in oblique directions in Fig. 3. The electrolyte flowing through the channel 120 from the inlet part 122i to the outlet part 124o is permeated and diffused in the electrode 10 disposed to face the bipolar plate 12. The electrolyte permeated and diffused in the electrode 10 flows from the supply-part-122i side to the discharge-part-124o side of the electrode 10 while carrying out a battery reaction in the electrode 10. Particularly in this example, since the constituent material of the electrode 10 sufficiently exists in the region of the electrode 10 disposed to face the ridge part 126 of the bipolar plate 12, the electrolyte is held within the electrode 10, and the battery reaction is properly carried out. As described above, since the electrolyte flows in the lateral direction between the vertical groove parts 122y and 124y through the electrode 10, the amount of electrolyte discharged in an unreacted state can be decreased. Consequently, the amount of current of the RF battery 1 can be increased, and hence the operational current density can be increased. Also, the RF battery that can increase the amount of current can be said RF battery that can decrease the internal resistance.

In this example, the openings of the lateral groove parts 122x and 124x and the vertical groove parts 122y and 124y in this example have linear shapes in which a plurality of rectangles are combined as illustrated in Fig. 3, and have rectangular cross-sectional shapes as illustrated in Fig. 1.

The entire channel 120 in this example has a uniform depth D₁₂ (Fig. 1). A length Lx of the lateral groove part 122x of the inlet channel 122 is equivalent to a length Lx of the lateral groove part 124x of the outlet channel 124, a width Wy of the vertical groove part 122y of the inlet channel 122 is equivalent to a width Wy of the vertical groove part 124y of the outlet channel 124, and a length Ly of the vertical groove part 122y of the inlet part 122 is equivalent to a length Ly of the vertical groove part 124y of the outlet channel 124. The interval C between the vertical groove parts 122y of the inlet part 122 is equivalent to the interval C between the vertical groove parts 124y of the outlet channel 124. It is preferable that the grooves forming the channel 120 have substantially equivalent shapes and substantially equivalent dimensions because the electrolyte can uniformly flow in the entire bipolar plate 12 and the entire region of the electrode 10 disposed to face the bipolar plate 12.

The inlet part 122i and the outlet part 124o in this example are disposed at end portions of the lateral groove parts 122x and 124x in the lateral direction, at diagonal positions of the rectangular bipolar plate 12. Accordingly, the flow of the electrolyte in the bipolar plate 12 and the flow of the electrolyte in the electrode 10 supplied to the electrode 10 through the channel 120 is easily generated in the vertical direction and the lateral direction. The electrolyte can be sufficiently held in the electrode 10, and therefore the battery reaction can be properly carried out.

Further, as the example illustrated in Fig. 1, in the case where the grooves are provided at both the front surface and the back surface of the bipolar plate 12, in a perspective plan view of the bipolar plate 12, it is preferable that at least part of the groove at the front surface overlaps at least part of the groove at the back surface because the flow of the positive electrolyte and the flow of the negative electrolyte can be uniform. In this example, in a perspective plan view of the bipolar plate 12, the lateral groove parts 122x and 124x and the vertical groove parts 122y and 124y at the front surface of the bipolar plate 12 overlap those at the back surface thereof.

### ··· Specific dimensions

Specific dimensions of the channel 120 of the bipolar plate 12 are described mainly with reference to Figs. 1 and 3. The sizes and numbers of respective parts illustrated in Figs. 1 to 3 are merely examples and may be appropriately changed.

The depth D₁₂ of the grooves forming the channel 120 is, for example, 10% to 45% of the thickness of the bipolar plate 12. Like this example, in a perspective plan view of the bipolar plate 12, in the case where the grooves at the front surface of the bipolar plate 12 overlap the grooves at the back surface thereof, if the thickness D₁₂ of the grooves is excessively large, the mechanical strength may be decreased. Hence, the depth D₁₂ of the grooves is preferably 10% to 35% of the thickness of the bipolar plate 12.

As the cross-sectional area of the grooves forming the channel 120 is larger, the flow resistance of the electrolyte in the battery cell 100 is decreased and a decrease in pressure loss can be expected. Hence, it is preferable to select the width Wy and the like of the opening of each of the grooves in accordance with the above-described depth D₁₂ so that the cross-sectional area is sufficiently large. For example, the width Wy of the openings of the vertical groove parts 122y and 124y disposed with the electrode 10 is preferably in a range from 0.1 mm to 2.0 mm. The width Wy of the openings may be in a range from 0.1 mm to 1.3 mm, 0.1 mm to 1 mm, 0.1 mm to 0.8 mm, or 0.1 mm to 0.5 mm.

### ··· Constituent material

The constituent material of the bipolar plate 12 may appropriately use a conductive material with a low electric resistance that does not react with the electrolyte and has resistance to the electrolyte (chemical resistance, acid resistance, etc.). Further, the constituent material of the bipolar plate 12 preferably has proper rigidity. This is because the shapes and dimensions of the grooves forming the channel 120 are hardly changed for a long term, and the effect of decreasing the flow resistance and the effect of decreasing the pressure loss obtained by the channel 120 can be easily held. A specific constituent material may be a composite material containing a carbon material and an organic material, more specifically, a conductive plastic containing a conductive inorganic material such as graphite and an organic material such as a polyolefin-based organic compound or chlorinated organic compound.

The carbon material may be, for example, carbon black or diamond-like carbon (DLC), instead of graphite. The carbon black may be acetylene black or furnace black. The carbon material preferably contains graphite. The carbon material may mainly contain graphite, and may partly contain at least one of carbon black and DLC. The conductive inorganic material may contain a metal such as aluminum in addition to the carbon material. The conductive inorganic material may be powder or fiber.

The polyolefin-based organic compound may be polyethylene, polypropylene, or polybutene. The chlorinated organic compound may be vinyl chloride, chlorinated polyethylene, or chlorinated paraffin.

The bipolar plate 12 having the channel 120 may be manufactured by shaping the above-described constituent material into a plate shape by a known method, such as injection molding, press molding, or vacuum molding, and by forming grooves serving as the channel 120. If the grooves are formed simultaneously with the bipolar plate 12, the bipolar plate 12 has good productivity. The grooves of the channel 120 may be formed by cutting a plate material without the channel 120.

### · Electrode

The electrode 10 is interposed between the membrane 11 and the bipolar plate 12. The electrolyte is supplied to the electrode 10 mainly through the channel 120 of the bipolar plate 12. The electrolyte is permeated and diffused in the electrode 10, the active material in the electrolyte carries out the battery reaction in the electrode 10, and the electrolyte after the reaction is discharged from the electrode 10. Because of this purpose, the electrode 10 is made of a porous body having multiple fine pores. The electrode 10 is typically a rectangular flat plate as illustrated in Figs. 2 and 3.

The first surface of the electrode 10 is a membrane-side surface disposed to face the membrane 11. The second surface of the electrode 10 is a bipolar-plate-side surface disposed to face the bipolar plate 12. In this example, as illustrated in Fig. 3, the electrode 10 is disposed to cover the region where the vertical groove parts 122y and 124y are formed included in the channel 120 formed at the surface of the bipolar plate 12 facing the electrode 10. Figure 3 illustrates the arrangement of the electrode 10 on the bipolar plate 12 such that both end edges in the vertical direction (upper and lower edges) of the electrode 10 overlap the lateral groove parts 122x and 124x. In this case, the length in the lateral direction of the electrode 10 is substantially equivalent to the length in the lateral direction of the bipolar plate 12. The length in the vertical direction of the electrode 10 is slightly smaller than the length in the vertical direction of the bipolar plate 12, and is slightly larger than the distance between the lateral groove part 122x of the inlet channel 122 and the lateral groove part 124x of the outlet channel 124.

### ·· Recesses

The electrode 10 has the plurality of recesses 10h in a region thereof facing the channel 120 of the bipolar plate 12 (channel-corresponding region). In a plan view of the electrode 10 from the membrane side as illustrated in Fig. 3, the channel-corresponding region in this example is a plurality of rectangular regions overlapping the vertical groove parts 122y and 124y of the channel 120. In this example, each of the rectangular regions has a plurality of recesses 10h.

The recesses 10h guide the electrolyte in the channel 120 to the electrode 10, from a side of the electrode 10 near the bipolar plate 12 (bipolar-plate-12 side) toward a side of the electrode 10 near the membrane 11 (membrane -11 side). The recesses 10h illustrated in Figs. 1 to 3 are each a through hole extending from the bipolar-plate-side surface of the electrode 10 to the surface of the electrode 10 facing the membrane 11 (membrane-side surface), and is open at both the bipolar-plate-side surface and the membrane-side surface. Since the recess 10h extends from the bipolar-plate-side surface to the membrane-side surface of the electrode 10, the electrolyte in the channel 120 of the bipolar plate 12 can be sufficiently guided from the bipolar-plate-side surface to the membrane-side surface as indicated by arrows in Fig. 1. While the electrolyte is moved from the bipolar-plate-12 side to the membrane -11 side of the electrode 10 through the recesses 10h, the electrolyte is permeated and diffused in the peripheral regions of the recesses 10h via the pores open at the inner walls defining the recesses 10h. The electrolyte diffused in the peripheral regions of the recesses 10h stays at the positions by a certain amount and carries out the battery reaction. Since the electrode 10 has the recesses 10h as described above, the constituent material of the electrode 10 at the recess 10h portions is reduced, and further in this example, the constituent material of the electrode 10 at the recess 10h portions is substantially none. Hence, the electrolyte is easily permeated and diffused from the bipolar-plate-12 side to the membrane -11 side in the thickness direction of the electrode 10. Accordingly, the flow resistance and the diffusion resistance can be decreased, and in this example in which the recesses 10h are the through holes, the resistances can be further decreased. In addition, the region where the battery reaction is carried out can be sufficiently ensured, and the utilization efficiency of the electrode 10 can be increased.

### ··· Shape

The shape of each of the recesses 10h can be appropriately selected. Figures 1 to 3 illustrate an example, in which the recess 10h is a cylindrical hole. In this example, the opening of the recess 10h has a circular shape (Figs. 2 and 3), and the cross section of the recess 10h has a rectangular shape (Fig. 1). If the recess 10h is a through hole having a uniform shape and a uniform size in the depth direction as described above, the recess 10h can be easily formed and hence the electrode 10 has good productivity. Alternatively, the opening of the recess 10h may have a non-circular shape, such as a rectangular shape or an ellipsoidal shape.

### ··· Method of forming recesses

The recess 10h formed of a through hole may be formed by using, for example, a hole making tool such as a puncher, or a laser.

### ··· Specific dimensions

It is assumed that the size of the opening (opening diameter R) of the recess 10h is sufficiently larger than the average diameter of the fine pores of the porous body forming the electrode 10. To be specific, the size of the opening (opening diameter R) of the recess 10h is preferably 10 times or more, or more preferably 30 times or more the average diameter of the pores. The recess 10h can be discriminated from the pores according to the size. Also, if the above-described cutting tool is used for forming the recess 10h, a cutting mark may remain. The recess 10h may be discriminated from the pores depending on the presence of the cutting mark.

An envelope circle of the opening of the recess 10h is defined, and the diameter of the envelope circle is assumed as the opening diameter R of the recess 10h. For example, as the opening diameter R of the recess 10h at the bipolar-plate-side surface is larger, the electrolyte is more easily guided from the inside of the channel 120 of the bipolar plate 12 to the membrane -11 side of the bipolar plate 12. The decrease in flow resistance and diffusion resistance of the electrolyte can be expected. Alternatively, for example, as the opening diameter R of the recess 10h at the membrane-side surface is larger, the electrolyte is more easily diffused in the region of the electrode 10 near the membrane 11, and the battery reaction is more easily carried out in the region near the membrane 11. In these points of view, for example, the opening diameter R may be substantially equivalent to the width Wy of the vertical groove parts 122y and 124y. In contrast, as the opening diameter R of the recess 10h is smaller, the decrease in mechanical strength of the electrode 10 due to the recess 10h is more easily decreased. If the opening diameter R is small, the flow resistance and the diffusion resistance of the electrolyte can be decreased by increasing the number of recesses 10h.

If the size of the recess 10h is excessively large, or if the number of recesses 10h is excessively large, the battery reaction zone of the electrode 10 may be reduced and the reaction resistance may be increased, or the strength of the electrode 10 may be decreased. In these points of view, the opening diameter R may be 5% or more of the width Wy of the vertical groove parts 122y and 124y, 10% to 100% of the width Wy, or 50% to 80% of the width Wy. The specific opening diameter R of the recess 10h may be, for example, in a range from 0.1 mm to 2.0 mm, 0.1 mm to 1.3 mm, 0.5 mm to 1.2 mm, or 0.8 mm to 1.0 mm. The size of the opening of the recess 10h may be selected with regard to, in addition to the size of the channel 120 of the bipolar plate 12 disposed to face the respective recesses 10h (particularly in this example, the width Wy and length Ly of the vertical groove parts 122y and 124y), the number of recesses 10h, the amount of battery reaction zone other than the recesses 10h, and the mechanical strength of the electrode 10.

### ··· Existing state

The recesses 10h may exist in the channel-corresponding region of the electrode 10 as illustrated in Figs. 2 and 3, and may not exist in the region other than the channel-corresponding region. In this embodiment, the percentage ((Sr/S₁₀ₕ)×100) of a total area Sr of the openings of the recesses existing in the region other than the channel-corresponding region with respect to a total area S₁₀ₕ of the openings of the recesses 10 existing in the channel-corresponding region of the electrode 10 is 0%. Hence, the total area S₁₀ₕ is sufficiently larger than the total area Sr. In this embodiment, the electrolyte is permeated and diffused in the region other than the channel-corresponding region of the electrode 10, or mainly the region disposed to face the ridge part 126 (Fig. 1) of the bipolar plate 12, the region can properly function as the reaction field of the active material, and the reaction field can be sufficiently ensured. Also, in this embodiment, the decrease in mechanical strength of the electrode 10 due to the recesses 10h can be decreased, and the strength is high.

It is assumed that the percentage of the total area S₁₀ₕ of the openings of the recesses 10 with respect to a total area S₁₂₀ of the openings of a portion of the channel 120 of the bipolar plate 12 covered with the electrode 10 (in this example, the total area of the vertical groove parts 122y and 124y), that is (S₁₀ₕ/S₁₂₀)×100 serves as an occupancy proportion. As the occupancy proportion is larger, the electrolyte in the channel 120 can be guided more by the recesses 10h of the electrode 10. As the occupancy proportion is smaller, the battery reaction zone in the peripheries of the recesses 10h can be sufficiently ensured. Regarding the supply amount of the electrolyte to the recesses 10h and the hold of the battery reaction zone in the peripheries of the recesses 10h, the occupancy proportion is preferably in a range from about 10% to 90%, more preferably in a range from about 30% to 90%, or further preferably in a range from about 50% to 80%.

### ·· Constituent material

The constituent material of the electrode 10 may preferably use a porous body containing carbon fiber, for example, carbon felt or carbon paper. The constituent material of the electrode 10 may use a porous body containing binder carbon in addition to the carbon fiber. The binder carbon is used for the purpose of increasing the conductivity with the carbon felt, and is used for the purpose of increasing the strength with the carbon paper. In the case of the porous body containing the binder carbon, the binder carbon may increase the flow resistance and the diffusion resistance of the electrolyte and may cause a decrease in flowability. However, since the electrode 10 has the recesses 10h, the recesses 10 can decrease the flow resistance and the diffusion resistance of the electrolyte.

The carbon felt or carbon paper may use known one or commercially available one. The recesses 10h may be formed by using a proper tool as described above in a commercial carbon felt or carbon paper. If the carbon felt is used, advantageous effects can be expected such that (1) oxygen gas is hardly generated even with an oxygen generation potential at charging in a case where an aqueous solution is used for the electrolyte, and (2) the electrolyte has good flowability. If the carbon paper is used, advantageous effects of (1) high electronic conductivity and (2) high strength can be expected.

### (Other components)

### • Electrolyte

The electrolyte used in the RF battery 1 contains active material ions, such as metal ions and non-metal ions. Examples of the electrolyte include a vanadium-based electrolyte containing vanadium (V) ions having different valences (Fig. 4) as a positive electrode active material and a negative electrode active material. Examples of other electrolytes include an iron-chromium electrolyte containing iron (Fe) ions as a positive electrode active material and chromium (Cr) ions as a negative electrode active material and a manganese-titanium electrolyte containing manganese (Mn) ions as a positive electrode active material and titanium (Ti) ions as a negative electrode active material. As the electrolyte, an aqueous solution containing, in addition to the active material, at least one acid or acid salt selected from the group consisting of sulfuric acid, phosphoric acid, nitric acid, and hydrochloric acid, can be used.

### · Membrane

As the membrane 11, for example, an ion exchange membrane, such as a cation exchange membrane or anion exchange membrane, may be used. The ion exchange membrane has characteristics such as (1) good separation between ions of the positive electrode active material and ions of the negative electrode active material, and (2) good permeability of H⁺ ions serving as a charge carrier in the battery cell 100, and can be suitably used for the membrane 11. As the membrane 11, a known membrane can be used.

### (Major advantageous effects)

In the RF battery 1 according to Embodiment 1, the bipolar plate 12 has the channel 120 and the electrode 10 has the plurality of recesses 10h in the channel-corresponding region disposed to face the channel 120. Hence, in the RF battery 1, the electrolyte in the channel 120 can be guided from the bipolar-plate-12 side to the membrane -11 side, the electrolyte is permeated and diffused in the peripheries of the recesses 10h during the guide, and the battery reaction can be carried out in the peripheries of the recesses 10h. That is, in the RF battery 1, the diffusion resistance of the electrode 10 can be decreased, and even when the operational current density is increased, the amount of change in cell voltage can be decreased. The advantageous effects will be specifically described in later-described Test example 1.

Also, in the RF battery 1, since the bipolar plate 12 has the channel 120 and the electrode 10 has the plurality of recesses 10h at the specific positions, the flow resistance in the thickness direction of the electrode 10 can be decreased, resulting in good flowability, the reaction field for the battery reaction can be ensured in the peripheries of the recesses 10h, and further the reaction field can be ensured from the bipolar-plate-12 side to the membrane -11 side. Accordingly, the amount of current is increased and high output can be obtained in the RF battery 1. Such a RF battery 1 can be suitably used for large-capacity use.

### [Test example 1]

For the RF battery in which the bipolar plate has the channel and the electrode has the plurality of recesses in the channel-corresponding region as described in Embodiment 1, a polarization characteristics test for measuring cell voltages upon application of current with various current densities was executed, and the performance of the RF battery was evaluated.

In this test, three types of RF batteries were prepared, the three types including Sample No. 1-1 (with grooves, with holes) in which a bipolar plate has a channel (grooves) and an electrode has a plurality of recesses (holes) at specific positions, Sample No. 1-100 (without groove, without hole) in which a bipolar plate does not have a channel, an electrode does not have a recess, and both are flat plates, and Sample No. 1-200 (with grooves, without hole) in which a bipolar plate has a channel, and an electrode does not have a recess and is a flat plate. Table I indicates specifications of RF batteries used in the test.

The respective materials of the bipolar plate, electrode, and membrane were the same for any of the samples. Also, each sample was a single cell.

Regarding the electrode to be used for Sample No. 1-1, carbon felt in Table I was prepared, and through holes with the opening diameter R (mm) in Table I were made only in a vertical groove part by the number in Table I, by using a hole making tool or the like.

Sample No. 1-1 and Sample No. 1-200 used the electrodes with the same size, and Sample No. 1-100 used a smaller electrode than the electrodes used for Sample Nos. 1-1 and 1-200 with regard to the flow resistance of an electrolyte.

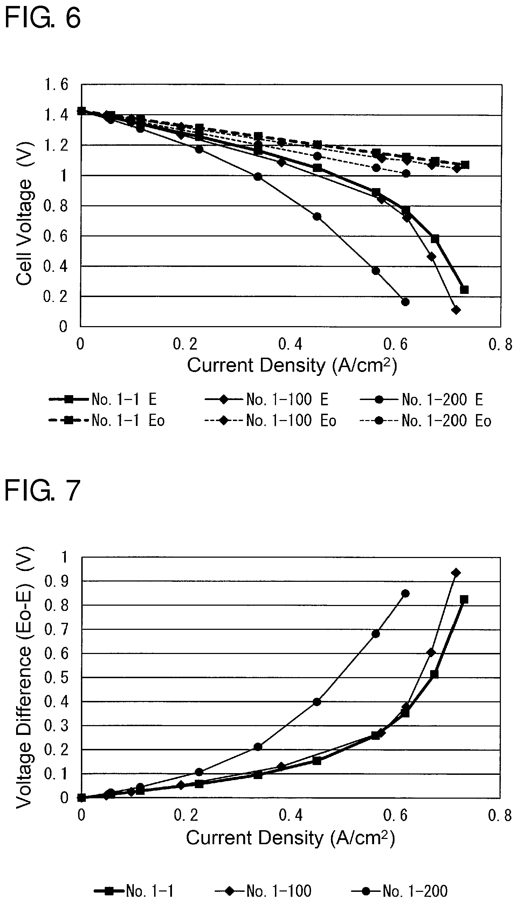

In this test, samples (RF battery) each using, as the electrolyte, a vanadium-based electrolyte in Table I in the state of charge (SOC) being 50% were prepared. The flow rates of the electrolytes of the respective samples were adjusted to the flow rate in Table I so that the flow rates per unit area are substantially equivalent to each other. Then initial cell voltages E₀(V) when current was applied with various current densities and stabilized cell voltages E(V) were measured. Figure 6 illustrates the results.

The initial cell voltage E₀ is a cell voltage that is obtained by sequentially measuring a cell voltage when current at a constant-value current density is applied and that is obtained when a rapid voltage drop occurs mainly due to the conductive resistance and the reaction resistance included in the internal resistance of the RF battery.

The stabilized cell voltage E is a cell voltage that is obtained when a moderate voltage drop occurs mainly due to the diffusion resistance included in the internal resistance of the RF battery after the aforementioned rapid voltage drop, the voltage drop is substantially stopped, and the voltage is stabilized.

Further, the difference (E₀ - E)(V) between the initial cell voltage E₀ and the stabilized cell voltage E was obtained. Figure 7 illustrates the results. The voltage difference (E - E₀)(V) is considered as overvoltage based on the diffusion resistance. In this case, the potential difference is called concentration overvoltage.

Further, a total-cell resistivity (Ω·cm²) and a resistivity of a diffusion resistance component (Ω·cm²) when the current density was 0.05A/cm² were obtained. Table I indicates the results. The total-cell resistivity was obtained by using the stabilized cell voltage E and the current value at this time. The resistivity of the diffusion resistance component (diffusion resistivity) was obtained by using the above-described voltage difference (concentration overvoltage) and the current value at this time.

**[Table I]**

| Sample No. | | | 1-1, grooves + holes | 1-100, no groove + no hole | 1-200, grooves + no hole |
|---|---|---|---|---|---|
| | Constituent material | | Powder compact of 80% graphite + 20% polypropylene (rectangular plate) | | |
| | Dimensions | | 60 mm × 80 mm, 3-mm thick | 60 mm × 80 mm, 3-mm thick | 60 mm × 80 mm, 3-mm thick |
| | Channel shape | | Facing and interdigitated comb-tooth shape | None | Facing and interdigitated comb-tooth shape |
| Bipolar plate | Vertical groove part | Number | 3 inlet channels, 2 outlet channels | - | 3 inlet channels, 2 outlet channels |
| | | Cross-sectional shape | Rectangular | - | Rectangular |
| | | Length Ly | 16 mm | - | 16 mm |
| | | Width Wy | 1 mm | - | 1 mm |
| | | Overlapping length Lo | 9 mm | - | 9 mm |
| | | Depth D | 1 mm | - | 1 mm |
| | Constituent material | | Carbon felt containing carbon fiber and binder carbon (rectangular plate) manufactured by SGL CARBON Japan Co., Ltd., GDL10AA | | |
| | Dimensions | | 9 cm² × 0.4-mm thick | 2.1 cm² × 0.4-mm thick | 9cm² × 0.4-mm thick |
| | Recess | Shape | Circular through hole at opening | None | None |
| Electrode | | Opening diameter R | About 0.5 mm, uniformly spaced at vertical groove part | - | - |
| | | Number | 12/vertical groove part, 60 in total | - | - |
| Membrane | | | Nafion (registered trademark) 212 manufactured by DuPont | | |
| Electrolyte | | Composition | Vanadium ion concentration 1.7 M, vanadium sulfate aqueous solution | | |
| | | Flow rate | 5.4 mL/min | 1.4 mL/min | 5.4 mL/min |
| Total-cell resistivity @ 0.05 A/cm² | | | 0.73 Ω/cm² | 0.76 Ω/cm² | 0.99 Ω/cm² |
| Diffusion resistivity @ 0.05 A/cm² | | | 0.19 Ω/cm² | 0.25 Ω/cm² | 0.37 Ω/cm² |

In Fig. 6, the horizontal axis plots the current density (A/cm²) and the vertical axis plots the cell voltage (V). The broken line indicates the initial cell voltage E₀ of each sample, and the solid line indicates the stabilized cell voltage E of each sample. It is found from the graph in Fig. 6 that both the initial cell voltage E₀ and the stabilized cell voltage E are decreased in each sample as the current density is increased. In particular, it is found that the decrease amount of the stabilized cell voltage E caused by the increase in current density is larger than the decrease amount of the initial voltage E₀ caused by the increase in current density.

Also, it is found from the graph in Fig. 6 that the initial cell voltages E₀ of the respective samples are substantially equivalent to each other and do not have a substantial difference. With regard to this, it is conceived that a voltage drop which may occur at an initial phase of energization is generated due to the conductive resistance originally owned by the electrode and the reaction resistance of the battery reaction, and the influence of the presence of the channel at the bipolar plate and the presence of the recesses in the electrode is small.

In contrast, a decrease amount d_{E} of the stabilized cell voltage E caused by the increase in current density varies depending on the sample.

In the case of Sample No. 1-100 without a groove and without a hole provides a relatively small decrease amount d_{E}. This is because, with Sample No. 1-100, the total-cell resistivity is relatively small and the diffusion resistivity is also relatively small as indicated in Table I. Since the total-cell resistivity and the diffusion resistivity are small, in the case of Sample No. 1-100, the increase amount of the above-described voltage difference (concentration overvoltage) caused by the increase in current density is relatively small as illustrated in Fig. 7. Thus, in the case of Sample No. 1-100, the electrolyte is easily permeated and diffused in the electrode, and the battery reaction is sufficiently carried out. However, in the case of Sample No. 1-100, the electrode cannot be increased in size because the increase in size causes an increase in flow resistance and an increase in pressure loss, and hence Sample No. 1-100 is not suitable for large-capacity use. In this test, the size of the electrode of Sample No. 1-100 is sufficiently smaller than the sizes of the electrodes of Samples Nos. 1-1 and 1-200.

In the case of Sample No. 1-200 with grooves and without a hole, the flow resistance can be decreased by the channel of the bipolar plate; however, the decrease amount d_{E} of the stabilized cell voltage E caused by the increase in current density is large as illustrated in the graph of Fig. 6. This is because, with Sample No. 1-200, the total-cell resistivity is large and the diffusion resistivity is also large as indicated in Table I. Since the total-cell resistivity and the diffusion resistivity are large, in the case of Sample No. 1-200, the increase amount of the above-described voltage difference (concentration overvoltage) caused by the increase in current density is large as illustrated in Fig. 7. In this test, for example, when the current density is about 0.45A/cm², the concentration overvoltage of Sample No. 1-200 is two times or more the concentration overvoltage of Samples Nos. 1-1 and 1-100. With regard to this, only providing the channel at the bipolar plate is not enough to sufficiently reduce the decrease in cell voltage caused by the increase in current density.

In the case of Sample No. 1-1 with grooves and with holes, the decrease amount d_{E} of the stabilized cell voltage E caused by the increase in current density is the smallest among the three samples as illustrated in the graph in Fig. 6. This is because the total-cell resistivity and the diffusion resistivity of Sample No. 1-1 are smaller than those of Sample No. 1-100 as indicated in Table I, and hence the internal resistance can be sufficiently decreased. Since the total-cell resistivity and the diffusion resistivity are sufficiently small, in the case of Sample No. 1-1, the increase amount of the above-described voltage difference (concentration overvoltage) caused by the increase in current density is small and is substantially equivalent to that of Sample No. 1-100 as illustrated in Fig. 7.

The above-described test results show that, as long as the bipolar plate has the channel and the electrode has the plurality of recesses at the specific positions, the amount of change in cell voltage can be decreased even when the operational current density is increased. In this test, the discharge current density is increased. However, even if the charge current density is increased, the amount of change in cell voltage can be decreased as long as the bipolar plate has the channel and the electrode has the plurality of recesses at the specific positions.

### [Modifications]

The following modifications can be made for the RF battery 1 according to Embodiment 1.

### (Channel of bipolar plate)

(1) The bipolar plate 12 has the channel 120 only at the front surface or the back surface, and only the electrode 10 disposed to face the surface with the channel 120 has the plurality of recesses 10h.
(2) In the case where the bipolar plate 12 has the channels 120 at both the front surface and the back surface, in a perspective plan view of the bipolar plate 12, the channels 120 at the front surface does not overlap the channel 120 at the back surface.
(3) In the case where the channel 120 has a facing and interdigitated comb-teeth shape, the comb tooth of the inlet channel 122 and the comb tooth of the outlet channel 124 extend in the lateral direction (in Fig. 3, left-right direction), and are alternately disposed in the vertical direction of the bipolar plate (in Fig. 3, up-down direction).
(4) The channel 120 has a facing non-interdigitated comb-teeth shape in which the inlet channel 122 and the outlet channel 124 are not interdigitated with each other. For example, a vertical groove part of the inlet channel and a vertical groove part of the outlet channel may face each other at an interval in the vertical direction of the bipolar plate 12. Even with the non-interdigitated comb-teeth shape, in the electrode 10, the region of the electrode 10 disposed to face a ridge part provided between adjacent channels functions as the battery reaction zone, and the amount of electrolyte discharged in an unreacted state can be decreased.
(5) At least one of the inlet channel 122 and the outlet channel 124 is not a continuous groove, but includes a group of intermittent grooves. For example, a vertical groove part may include a group of grooves disposed at an interval in the vertical direction (in Fig. 3, up-down direction) of the bipolar plate. In this case, the bipolar plate includes not only a ridge part extending in the lateral direction but also a ridge part extending in the vertical direction. The region of the electrode disposed to face these ridge parts can serve as the battery reaction zone. The battery reaction zone can be increased and an increase in current amount is expected.
(6) The inlet part 122i and outlet part 124o are disposed at center portions in the lateral direction of the lateral groove parts 122x and 124x.
(7) The shape of the openings of the grooves forming the channel 120 has a meandering shape, such as a wave-like shape or a zigzag shape. The above-described cross-sectional shape of each of the grooves is a shape with a curved surface, such as a semicircular shape or a rectangular shape with rounded corners. Otherwise, the groove may be a dovetail groove having a larger width at the bottom than the opening diameter.
(8) At least one of the depth D₁₂, width Wy, length Ly, and interval C of the grooves forming the channel 120 is partly different. For example, the inlet part 122 and the outlet part 124 may have different depths D₁₂, different widths Wy, and different lengths Ly.

### (Recesses of electrode)

(1) The shape and size in the depth direction of the recesses 10h are partly different. For example, the recess 10h may each have a tapered shape in which the size of the opening increases or decreases from the bipolar-plate-12 side toward the membrane-11 side of the electrode 10 continuously or stepwise. In this case, the cross-sectional shape of the recess 10h is a trapezoidal shape.
(2) The recess 10h is a bottomed hole (closed hole) or a groove having an opening only at the bipolar-plate-side surface of the electrode 10. Alternatively, the recess 10h is a bottomed hole (closed hole) or a groove having an opening only at the membrane-side surface of the electrode 10. The depth of the hole or groove is, for example, larger than 50% of the thickness of the electrode 10 and smaller than the thickness of the electrode. As the depth of the hole or groove is larger, the amount of electrolyte in the channel 120 of the bipolar plate 12 to be guided to the membrane-11 side can be increased and the utilization efficiency of the electrode 10 can be increased. Hence, the depth of the hole or groove may be preferably 60% or more, 70% or more, 80% or more, or 90% or more of the thickness of the electrode 10. The hole or groove may be formed by removing the constituent material at the groove formation position of the electrode material by using a tool, such as a needle or a cutter.
(3) The electrode 10 includes both a through hole and a groove as recesses 10h.
(4) The electrode 10 includes recesses 10h in a region other than the channel-corresponding region. In this case, the total area S₁₀ₕ of the openings of the recesses 10 in the channel-corresponding region of the electrode 10 is preferably larger than the total area Sr of the openings of the recesses 10 in the region other than the channel-corresponding region (S₁₀ₕ > Sr). Accordingly, the reaction field for the active material can be sufficiently ensured as described above. In view of ensuring the battery reaction field, the above-described percentage (Sr/S₁₀ₕ)×100 is preferably 20% or less, 15% or less, or 10% or less.

In view of ensuring the battery reaction field, the percentage (Sr/S₁₀ₕ)×100 is the most preferably 0%. If the recesses 10 exist only in the channel-corresponding region like Embodiment 1, the percentage (Sr/S₁₀ₕ)×100 is 0%.

The present invention is not limited to the examples described above, but is defined by the claims, and is intended to include all modifications within the meaning and scope equivalent to those of the claims. For example, the area and thickness of the electrode, the specifications of the recesses (for example, size, number, and shape), the specifications of the channel of the bipolar plate (for example, sizes, shapes, and numbers of vertical groove parts and lateral groove parts), and the type of electrolyte in Test example 1 can be changed.

### Industrial Applicability

The redox flow battery of the present invention can be used for a storage battery aimed at stabilizing variation in output of generated electric power, storing electric power when the generated electric power is excessive, and smoothing a load, for natural energy power generation, such as solar photovoltaic power generation, wind power generation, or other power generation. The redox flow battery of the present invention can be also used as a storage battery aimed at countermeasure of a voltage sag or a power failure and smoothing a load while equipped with a typical power plant. In particular, the redox flow battery of the present invention can be suitably used for a large-capacity storage battery aimed at the above-described purposes.

### Reference Signs List

1 redox flow battery (RF battery)
10 electrode, 10c positive electrode, 10a negative electrode, 10h recess
11 membrane
12 bipolar plate
   120 channel, 122 inlet channel, 124 outlet channel, 126 ridge part
   122i inlet part, 124o outlet part
   122x, 124x lateral groove part, 122y, 124y vertical groove part
100 battery cell
   15 frame assembly, 150 frame member
   152c, 152a liquid supply hole, 154c, 154a liquid discharge hole
   170 end plate, 172 joining member
106 positive tank, 107 negative tank, 108 to 111 duct
112, 113 pump
200 alternating-current/direct-current converter, 210 transformer facility, 300 power generation unit, 400 load

## Claims

1. A redox flow battery, comprising:
an electrode to which an electrolyte is supplied;
a membrane disposed to face a first surface of the electrode; and
a bipolar plate disposed to face a second surface of the electrode,
wherein the bipolar plate has a channel at a surface thereof facing the electrode, the electrolyte flowing through the channel, and
wherein the electrode has a plurality of recesses in a region thereof facing the channel, the recesses guiding the electrolyte in the channel from a side near the bipolar plate toward a side near the membrane.

2. The redox flow battery according to claim 1, wherein a total area of openings of the recesses in the region of the electrode facing the channel is larger than a total area of recesses in a region other than the region facing the channel.

3. The redox flow battery according to claim 1 or 2, wherein the recesses include through holes.

4. The redox flow battery according to any one of claims 1 to 3, wherein the recesses each have an opening diameter in a range from 0.1 mm to 2.0 mm.

5. The redox flow battery according to any one of claims 1 to 4,
wherein the channel includes an inlet channel through which the electrolyte is supplied to the electrode, and an outlet channel which does not communicate with the inlet channel and is independent from the inlet channel and through which the electrolyte is discharged from the electrode, and
wherein the inlet channel and the outlet channel have respective regions with comb-tooth shapes, respective comb teeth of the comb-tooth shapes being disposed to face each other and to be interdigitated with each other.

6. The redox flow battery according to any one of claims 1 to 5, wherein a constituent material of the electrode contains carbon fiber and binder carbon.
